# EUROPEAN PATENT SPECIFICATION

(11) **EP 1 322 739 B1**
(45) Date of publication and mention of the grant of the patent: **30.11.2005**
(21) Application number: 01980423.6
(22) Date of filing: 21.09.2001
(51) Int. Cl.: C11D 3/00, C11D 17/00, C11D 3/20, C11D 3/10, C11D 3/02, C11D 1/62, C11D 3/50, B01J 13/02

(54) **GRANULATED COMPOSITION**
GRANULIERTE ZUSAMMENSETZUNG
COMPOSITION GRANULEE

(30) Priority: 25.09.2000 EP 00120841
(43) Date of publication of application: 02.07.2003
(73) Proprietor: Givaudan SA, 1214 Vernier-Genève (CH)
(72) Inventor: HART, Gerald, Leslie, Surbiton, Surrey KT5 8BD (GB); NAISH, Guy, Edward, Narborough, Leicester LE9 5DD (GB)
(74) Representative: McStea, John Anthony
(86) International application number: PCT/EP2001/010936
(87) International publication number: WO 2002/024847

(56) References cited:
- GB-A- 1 138 730
- US-A- 3 773 922
- US-A- 4 368 134

## Description

The present invention relates to a granulated composition comprising an effervescent component consisting of a core material and a protecting outer layer and to the method for preparing such a composition.

Various cleansing products for use in toilets are known. Such cleansing products typically contain a surfactant for cleaning, often oxidizing agents, binders, dyes and fragrances. Market research has shown that consumers are dissatisfied with the apparent effectiveness of current toilet cleansing products. Such products should be very effective and should not include materials which are environmentally unacceptable or have an unpleasant smell. Therefore the consumer is seeking a product with a dramatic point of difference to existing products.

Effervescent compositions are widely used in medicine. Due to the fact that such compositions are sensitive to moisture in the atmosphere a secondary packing comprising a binder is normally used to prevent the liberation of carbon dioxide by moist air (US 5,593,693).

EP 0 045 894 describes a process for producing a cocoa powder mix characterized in that immediately before agglomeration cocoa aroma is sprayed onto a powder which is not sensitive to moisture, after which the powder is agglomerated using steam or water and then dried. EP 11 807 describes the preparation of water dispersible or soluble granulates by spraying agitated powder with steam and drying the product.

US 3,773,922 describes a process for the manufacture of effervescent tables containing at least one medicine and an effervescent mixture.

US 4,368,134 describes a process for the manufacture of crutcher slurries in the presents of small quantities of citric acid to prevent gelling.

GB 1,138,730 describes a process for the production of a mixture of mono-, di- and tri-sodium salts of 1,2,3,-isopropanol tricarboxylic acid for use in the manufacture of effervescent composition.

It is an object of the present invention to provide a cleansing product with an outstanding in-use performance comprising an excellent distribution of a detergent as well as an intensive fresh odor.

Surprisingly it was found that the desired performance can be provided by a granulated composition comprising an effervescent component, and consisting of a core material and a protecting outer layer characterized in that the outer protecting layer is the hydrated core material. Due to this outer protecting layer the core is protected against moist air and therefore a long shelf life is guaranteed. This outer protecting layer has a preferred thickness of 5 to 10 µm.

A composition according to the present invention comprises a component which effervesces in the presence of an aqueous acidic solution, an acidic substance and a detergent. In a preferred embodiment a composition according to the present invention comprises additionally an antimicrobial agent and/or fillers and/or a fragrance and/or a drying agent and/or other optional ingredients such as dyes, builders, bleaches, enzymes, abrasive substances, or combinations thereof. When added to water the acidic substance dissolves to give an aqueous acid environment which hydrolyzes the effervescent component which results in its decomposition to liberate carbon dioxide. The bubbles formed are stabilized by the detergent. Together with the carbon dioxide the fragrance is liberated which results in a nice, fresh smell.

As effervescent component, a variety of substances can be utilized. To mention a few examples, alkali metal carbonates (e.g. sodium bicarbonate, sodium sequicarbonate, potassium bicarbonate, etc.) alkali metal hydrogen carbonates (e.g. sodium hydrogen carbonate, potassium hydrogen carbonate, etc.) and ammonium carbonate can be employed. These effervescent components can be used singly or in combination. Most preferred effervescent components are sodium carbonate and sodium hydrogen carbonate. The proportion of effervescent component can be selected from the range of 10-90% by weight of the composition.

The effervescent component mentioned above is used in combination with an acidic substance. The acid substance is such that it is a solid capable of reacting with the effervescent component in the presence of water to produce a gas. It may be any suitable organic, mineral or inorganic acid, or a derivative thereof, or a mixture thereof. The acid source may be a mono-, bi-, or tri-protonic acid. Said acid can be used in their protonized form or as salt thereof. The source of acidity is preferably non-hygroscopic, which can improve storage stability. The acid is preferably water-soluble. Suitable acids include citric, malonic, oxalic, glutaric, tantaric acid, succinic or adipic acid, monosodium phophate, sodium hydrogen sulfate, boric acid, or a salt or an ester thereof, and sulphamic acid. Acidic substances are employed in an amount of 5% to 70% by weight of the formulation. These acidic substances can also be used singly or in combination. A preferred mixture of acidic substances is formed by mixing citric and sulphamic acid, more preferred the ratio of citric to sulphamic acid is between 5:1 and 1:5, more preferably between 3:1 and 1:3, most preferably 1:1. The effervescent component and acid need not be present in equivalent amounts. The amount of each component necessary to generate a desired concentration of carbon dioxide gas can easily be calculated by one of ordinary skill in the art based upon the stoichiometry of the ingredients chosen and the conditions under which they are expected to react.

Various known fragrances are added depending on the type of aroma which is to be imparted. The fragrance which can be of any type suitable for use in household cleaners can be included at any level between 0.1 and 10%, most preferably up to 5% and with a most preferred inclusion level of 0.25% to 5% by weight.

Various detergents are useful in conjunction with the present invention, selected from nonionic, anionic, cationic, and amphoteric surfactants.

Suitable anionic surfactants are, in particular, those of the sulfate and sulfonate type. The anionic surfactants are mainly used in the form of their sodium salts. Particularly suitable surfactants of the sulfate type are the sulfuric acid monoesters of primary alcohols of natural and synthetic origin, e.g. the sulfuric acid monoesters of fatty alcohols, for example cocofatty alcohols, tallow fatty alcohols, oleyl alcohol or C₁₀-C₂₀ oxo alcohols, and those of secondary alcohols with the same chain length. The sulfuric acid monoesters of aliphatic primary alcohols ethoxylated with 1 to 6 moles of ethylene oxide or ethoxylated secondary alcohols or alkylphenols may also be used.

The surfactants of the sulfonate type are, above all, the alkyl benzene sulfonates containing C₉-C₁₅ as alkyl groups and olefin sulfonates,e.g. mixtures of alkene and hydroxyalkane sulfonates and disulfonates of the type obtained, for example, from monoolefins with a terminal or internal double bond by sulfonation with gaseous sulfur trioxide and subsequent alkaline or acidic hydrolysis of the sulfonation products. Other useful surfactants of the sulfonate type are the alkane sulfonates obtainable from C₁₂-C₁₈ alkanes by sulfochlorination or sulfoxidation and subsequent hydrolysis or neutralization or by addition of bisulfites onto olefins and also the esters of alpha-sulfofatty acids, for example the alpha-sulfonated methyl- or ethyl-esters of hydrogenated coconut oil, palm kernel oil or tallow fatty acids.

Cationic surfactants useful in this invention include, e.g. quaternary ammonium compounds such as C₁₀-C₂₂ fatty ammonium compounds, C₁₀ to C₂₂ fatty morpholine oxides, propylene oxide condensates of C₁₀ to C₂₂ fatty acid monoesters of glycerins, the mono- or di-ethanol amides of C₁₀ to C₂₂ fatty acids, and alkoxylated siloxane compounds containing ethylene oxide units and/or propylene oxide units. As is known in the surfactant art, the counter-ion for cationic surfactants is usually a halide, sulfate, or methylsulfate, the chlorides being the most common industrially available compounds.

Other suitable cationic surfactants suitable for use in the present invention include straight chain alkyl fatty amines, alkyl-substituted quaternary ammonium salts, alkylaryl-substituted quaternary ammonium salts, quaternary imidazolinium salts, amine oxides, fatty amine oxides, trifatty amine oxides, triquaternary phosphate esters, amphoglycinate phosphates, amine acetates, long chain amines and their salts, diamines and their salts, polyamines and their salts, polyoxyethylenated long chain amines, and quaternized polyoxyethylenated long chain amines.

Examples of nonionic surfactants that can be employed are alkoxylated alkyl phenols, amides, amines, ethoxylated or propoxylated higher aliphatic alcohols, alkyl polyglucosides, alkyl polysaccharides and sulfonamides. These well known nonionic surfactants include sorbitan esters of C₁₀ to C₂₂ fatty acids, polyoxyethylene sorbitan esters of C₁₀ to C₂₂ fatty acids, polyoxyethylene sorbitol esters of C₁₀ to C₂₂ fatty acids, polyoxyethylene derivatives of C₆ to C₂₀ fatty phenols, and polyoxyethylene condensates of C₁₀ to C₂₂ fatty acids or fatty alcohols. Polyoxyethylene and polyoxypropylene analogs of the above surfactants also can be used in the present invention.

Amphoteric surfactants useful in this invention generally include betaines, sultaines, and imidazoline derivatives. Specific amphoteric surfactants useful in this invention include ricinoleamidopropyl betaine, cocamidopropyl betaine, stearyl betaine, stearyl amphocarboxy glycinate, sodium lauraminopropionate, cocoamidopropyl hydroxy sultaine, disodium lauryliminodipropionate, tallowiminodipropionate, cocoamphocarboxy glycinate, cocoimidazoline carboxylate, lauric imidazoline monocarboxylate, lauric imidazoline dicarboxylate, lauric myristic betaine, cocoamidosulfobetaine, and alkylamidophospho betaine.

The choice of the detergents and their percentage content in the granulated composition according to the invention is determined by the intended cleaning performance and foaming characteristics desired. It may be preferable in certain embodiments of the present invention to include a mixture of surfactants. In all embodiments, the detergents selected should be effective to enhance formation of voluminous stable foam with the dissolved carbon dioxide gas. The detergents should be present in an amount of 0.1 to 30% by weight, preferably 0.5% to 8% by weight, more preferably 1% to 6% by weight, and most preferably 2% to 5% by weight.

In another embodiment the composition according to the present invention may comprise builders. The term "builder" as used herein means an agent added to a composition in order to reduce the level of calcium in hard water. Suitable builders include: calcium-binding substances, precipitants, calcium-specific ion exchangers and mixtures thereof. Examples of calcium-binding substances include alkali metal polyphosphates, such as sodium tripolyphosphate; nitrilotriacetic acid and water-soluble salts thereof; the alkali metal salts of carboxymethyloxysuccinic acid, ethylenediaminetetraacetic acid, oxydisuccinic acid, mellitic acid, benzopolycarboxylic acids. Examples of precipitants are sodium orthophosphate, sodium carbonate and soaps from long-chain fatty acids. Examples of calcium-specific ion exchangers are alkali metal aluminosilicates, e.g. sodium aluminosilicate. Builders are typically present at levels of up to 20% by weight, preferably 1% to 10% by weight of the composition.

In another preferred embodiment the composition according to the present invention may also comprise antimicrobial agents. The antimicrobial agents are preferably selected from the group of quaternary ammonium germicides, such as cetyl trimethyl ammonium bromide, alkyl aryl ammonium halides such as octadecyl dimethyl benzyl ammonium bromide, N-alkyl pyridinium halides such as N-cetyl pyridinium bromide. Other suitable types of quaternary ammonium germicides include those in which the molecule contains either amide, ether or ester linkages such as octyl phenoxy ethoxy ethyl dimethyl benzyl ammonium chloride, and N- (laurylcocoaminoformylmethyl)-pyridinium chloride. Other very effective types of quaternary ammonium germicides include those in which the hydrophobic radical is characterized by a substituted aromatic nucleus as in the case of lauryloxyphenyltrimethyl ammonium chloride, cetylaminophenyltrimethyl ammonium methosulfate, dodecylphenyltrimethyl ammonium methosulfate, dodecylbenzyltrimethyl ammonium chloride, and chlorinated dodecylbenzyltrimethyl ammonium chloride. They also include metal salts such as zinc citrate, zinc oxide, zinc pyrethiones, and octopirox; organic acids, such as sorbic acid, benzoic acid, and their salts; parabens, such as methyl paraben, propyl paraben, butyl paraben, ethyl paraben, isopropyl paraben, isobutyl paraben, benzyl paraben, and their salts; alcohols, such as benzyl alcohol, phenyl ethyl alcohol; boric acid; 2,4,4'-trichloro-2-hydroxy-diphenyl ether; phenolic compounds, such as phenol, 2-methyl phenol, 4-ethyl phenol; essential oils such as rosemary, thyme, lavender, eugenol, geranium, tea tree, clove, lemon grass, peppermint, or their active components such as anethole, thymol, eucalyptol, farnesol, menthol, limonene, methyl salicylate, salicylic acid, terpineol, nerolidol, geraniol, and mixtures thereof.

The composition according to the invention may contain abrasive particles. The choice is not limited and any suitable particles of appropriate particle size and abrasivity may be used. Examples of suitable abrasive particles include calcium carbonate, pumice stone, calcite, dolomite, feldspar, talc, alumina, silica, quartz, perlite, zirconium silicate and diatomaceous earth and organic materials such as melamine, resins such as urea formaldehyde resins, polyethylene beads and polyamide derivatives or any other substance that is commonly used as an abrasive particle but does not result in the generation of noxious gases, such as sulphur dioxide, on contact with water. The abrasive particles may be present in amounts of up to 30%, most preferably 2% to 15% by weight of the composition.

The composition according to the present invention may additionally comprise a bleach and/or a bleach activator. Such bleaches include, for example, perborates, percarbonates, persilicates, perphosphates, and mixtures thereof. Bleach activators may be compounds having quaternary ammonium structures, such as, for example, 2-(N,N,N-triethylammonio)ethyl 4-sulfophenyl carbonate, N-octyl-N,N-dimethyl-N-10-carbophenoxydecylammonium chloride, sodium 3-(N,N,N-trimethylammonio)-propyl 4-sulfobenzoate and N,N,N-trimethylammonium tolyloxybenzenesulfonate. Another class of bleach activators are esters such as, for example, acylphenolsulfonates and acylalkylphenolsulfonates and acylamides. Most preferred are sodium 4-benzoyloxybenzenesulfonate, N,N,N',N'-tetraacetylethylenediamine (TAED), sodium 1-methyl-2-benzoyloxybenzene4-sulfonate, sodium 4-methyl-3-benzoyloxybenzoate, sodium nonanoyloxybenzenesulfonate, sodium 3,5,5-trimethylhexanoyloxybenzenesulfonate, benzoylcaprolactam, 2-phenyl-4H-3,1-benzoxazin-4-one, glucose pentaacetate and tetraacetylxylose and also ketones and nitrilic activators. Optionally bleach activators may include for example transition metal salts and corresponding complexes with, e.g. chelating compounds. Chlorine bleaches may be used and include, for example, chlorinated isocyanuric acids and salts thereof include dichloroisocyanuric acid, trichloroisocyanuric acid, or alkali metal salts thereof such as sodium dichloroisocyanurate in either granular or powdered form or combinations thereof. Any reference to such salts herein, whether specific or in general, refers to both the anhydrous form as well as any hydrates thereof.

The composition according to the present invention may further comprise enzymes. Enzymes may be lipase enzymes for the degradation of oleaginous materials such as fats, greases and oils, protease enzymes to degrade proteins and amylase enzymes to degrade starch and mixtures thereof.

A drying agent may be added to assist in the prevention of caking and of the liberation of free hydrogen ions. This is to maintain a free flowing powder before agglomeration. Examples of drying agents are, without limiting the process of the invention to these examples, activated aluminum oxide, barium oxide, calcium oxide, calcium chloride, calcium sulphate, lithium chloride, sodium sulphate, magnesium sulphate, magnesium chloride, and natural or synthetic hydrophilic aluminosilicates of the zeolite type. The drying agent may be present in amounts of up to 20% by weight of the composition.

A dye or colorant is also preferably included at concentrations up to 3% by weight, preferably up to 0.3% by weight. The amount of coloring agents or dyes to be dispensed into the water will depend on the color intensity desired and the cost of the dye. The choice of the coloring agent will largely depend on the color desired for the water into which the powder is to be dispensed. A preferred coloring agent is FD & C Blue 1.

The composition according to the present invention may additionally comprise fillers. Appropriated fillers are well know to those skilled in the art. The fillers function as materials which comprise part of the formula as non-functional bulking agents. Examples for fillers are alkaline earth metal salts of sulphates, e.g. sodium sulphate, and chlorides

Other optional ingredients such as soil release polymers, brightening agents, anti-redeposition agents, starches and other binders and such like as those skilled in the art may consider can be incorporated.

It was found that when the composition according to the present invention is agglomerated using steam, surprisingly the moist air is not able to penetrate the protecting outer layer. Therefore the core of said composition is protected against ingress of moisture and so is resistant to liberation of carbon dioxide and therefore also against loss of fragrance. Consequently it is not necessary to take additional precautions to protect such a composition from moisture, for example by employing a second packaging comprising a binder.

The invention provides in another aspect a method of producing a composition as hereinabove defined comprising the steps of mixing and optionally milling an effervescent material with an acidic substance, detergent and optionally other ingredients defined above, and thereafter fluidizing the resulting mixture on a fluidized bed with a water-containing gas. All ingredients to be used are dry, that is, essentially free of non-chemically bound water, e.g. having less than 0.5% by weight non-chemically bond water, and preferably are all solids with the exception of the fragrance. The resulting mixture is a powder. The water-containing gas, preferably atomized water, is introduced at temperatures from ambient up to 100°C after fluidizing the resulting mixture. The amount of water added in the fluidized bed is preferably approximately 0.2 to 0.5% by weight of the resulting mixture. Once the agglomeration of particles reaches the desired average size of 0.1 to 5 mm, preferably 0.5 to 3mm, then the introduction of water-containing gas, e.g. atomized water is terminated and dry air is introduced to remove excess humidity. The moisture content of the agglomerated composition is preferably less than 2% by weight. Any apparatus providing a fluidized bed and a means to introduce atomized water can be used to carry out this process, e.g. GPC supplied by Glatt. Other suppliers for fluid bed agglomerators are, e.g. Eurovent Ltd. and Niro Inc..

In another embodiment of the process described above the agglomeration composition may be post-dosed with fragrance, for example by introducing a fragrance on to the fluidized bed after the agglomeration process is finalized, or spraying on in a separate mixer. Preferably, only up to 5% (w/w) fragrance, more preferably up to 3%, may be post-dosed to ensure that the protecting layer is not compromised.

In a preferred embodiment the composition according to the present invention is such as to contain an acid system that is capable of removing inorganic stains such as iron, manganese stains and limescale deposits, whilst maintaining optimum gas release and powder properties. The preferred acid system is sulphamic acid and preferably a sulphamic acid and citric acid mixture in the ratio 5:1 to 1:5, preferably 3:1 to 1:3. Such compositions are particularly useful for toilet-cleaning operations.

The composition of the present invention may be used as household and industrial products for a variety of cleaning purposes such as cleaning hard surfaces. Said compositions are particularly suitable in the cleaning of inclined surfaces including toilet bowls, basins, lavatories and surfaces in the kitchen.

The composition according to the present invention may be contained in a dispenser that is designed to allow the composition to be poured onto the surface to be cleaned, or in a container which has a system that will measure out a unit dose prior to pouring onto the surface to be cleaned.

In another embodiment the composition is contained in a water-soluble sachet, such as a poly vinyl alcohol sachet, which can then be introduced into water as a measured dose. The composition may be also contained in a pad, either by sealing it between two layers or in sealed pockets, which can be moistened to generate the release of actives for cleaning a surface. In a further embodiment the granulated composition according to the invention may be formed into tablets by compressing it in an appropriate manner.

The following examples illustrate compositions according to the present invention. The exemplified compositions are illustrative only and do not limit the scope of the invention.

### Example 1:

This example illustrates two compositions in a preferred embodiment before granulation has taken place.

| | % weight/weight | |
|---|---|---|
| Sodium bicarbonate | 38 | 30 |
| Citric acid anhydrous | 30 | 20 |
| Magnesium suphate anhydrous | 7 | 3 |
| Cetyl trimethylammonium bromide | 2 | 0 |
| Sodium lauryl sulphate (100% AD) | 0 | 2 |
| Biocide | 0 | 0.1 |
| Fragrance | 1 | 1 |
| Calcium carbonate | 22 | 43.9 |

### Example 2:

The following powders were granulated and evaluated for iron stain removal and foaming:

| Ingredients | Formulation | | |
|---|---|---|---|
| | A | B | C |
| Sodium bicarbonate | 40.000 | 40.000 | 44.000 |
| Citric acid | 26.485 | 39.730 | 44.000 |
| Sulfamic Acid | 26.485 | 13.240 | - |
| Cetyl trimethyl ammonium bromide | 2.000 | 2.000 | 2.000 |
| Sodium lauryl Sulfate | 5.000 | 5.000 | 5.000 |
| FD&C Blue #1 | 0.030 | 0.030 | 0.050 |
| Anhydrous Magnesium Sulphate | - | - | 4.95 |
| % w/w | | | |

Fragrance was post-dosed at 1% by weight of the granulated composition.

### Iron Stain Removal

The backside of 4x4 inch ceramic tiles were sprayed with a 1.5% ferric chloride (FeCl₃ x 6H₂O) until the tile was saturated. This was repeated 2 times. The tiles were air dried overnight and then cut into 2 x 2 inch size for use in testing. The stained tiles were placed in 350 ml of the solution of a 25% (w/w) solution of the granulated composition for one hour. Stain removal was determined by sensory panel evaluation.

Samples were randomized and presented to panelists (n = 10). Coloration was rated on a Labeled Magnitude Scale. The Labeled Magnitude Scale (LMS) is a semantic scale of perceptual intensity characterized by a quasi-logarithmic scaling of its verbal labels. It allows the panelist to rate the intensity of the staining using natural language descriptors. Experimental samples were compared to a stained control, an unstained control was presented as a reference. Percentage reduction in staining was calculated between the stained control and the experimental samples. Results were:

| | % Stain Reduction |
|---|---|
| Formulation A | 93.2 |
| Formulation B | 60.0 |
| Formulation C | 47.2 |

### Foam Evaluation

25 grams of each powder, respectively, was added to a toilet and the foaming observed. Formulation A and B after 10 seconds gave a higher creamier foam than formulation C.

### Example 3:

The following powders were prepared:

| | D | E | F |
|---|---|---|---|
| | | % weight/weight | |
| Sodium Bicarbonate | 39.000 | 39.500 | 36.000 |
| Citric Acid | 26.485 | -- | 26.485 |
| Sulfamic Acid | 26.485 | 52.470 | 26.485 |
| Sodium Lauryl Sulfate | 5.000 | -- | -- |
| Linear alkyl benzene sulfonate | -- | 5.000 | 5.000 |
| Cetyl trimethyl ammonium bromide | 2.000 | 2.000 | -- |
| FD&C Blue Dye #1 | 0.030 | 0.030 | 0.030 |
| Magnesium Sulfate Anhd. | -- | -- | 5.000 |
| Fragrance | 1.000 | 1.000 | 1.000 |

### Example 4:

### Method of Manufacture

A fluid-bed dryer (87 litre capacity) was used at the Eurovent Technology & Trial Centre. The bed was preheated to 55°C. The ingredients according to Example 1 to 3 were mixed and milled to form a homogenous powder. The milled mixed powder was vacuum transferred to the fluid-bed dryer. This transfer was made through the spray inlet. 20kg of the powder was placed in the bed.

The spray was checked to ensure water addition was 130 ml / min - atomized to 2 bar (external). The inlet air temperature was set to 85°C, and the temperature of the powder was raised to 55°C. Once the product reached this temperature, water was then sprayed onto the fluidized powder. 2.5 litre water was sprayed (hence the spraying process took just under 20 minutes to complete.

Once the sprayer was turned off, the product was dried with hot air (still at 85° C) until the product temperature reached 60° C. The product was then removed from the bed.

## Claims

1. Granulated composition comprising an effervescent component, and wherein the granules consisting of a core material comprising from 5 - 70% by weight of an acidic substance, a detergent, and a component which effervesces in the presence of an aqueous acid solution, and a protecting outer layer **characterized in that** the protecting outer layer is hydrated core material.

2. Granulated composition according to claim 1 **characterized in that** the protecting outer layer has a thickness of 5 to 10 µm.

3. Granulated composition according to any of the preceding claims having a particle size of 0.1 to 5mm, preferably 0.5 to 3mm.

4. Granulated composition according to any of the preceding claims comprising a fragrance as ingredient.

5. Granulated composition according to any of the preceding claims comprising a drying agent as ingredient.

6. Granulated composition according to any of the preceding claims comprising 10 to 90% by weight of the effervescent component.

7. Granulated composition according to any of the preceding claims comprising 0.1 to 30% by weight of a detergent.

8. Granulated composition according to any of the preceding claims comprising up to 10% by weight of a fragrance.

9. Granulated composition according to any of the preceding claims comprising up to 20% by weight of a drying agent.

10. Granulated composition according to any of the preceding claims comprising up to 30% by weight of a abrasive substance.

11. Granulated composition according to any of the preceding claims wherein the effervescent component is selected of the group of sodium bicarbonate, sodium sequicarbonate, potassium bicarbonate and potassium carbonate.

12. Granulated composition according claim 1 to 11, wherein the acidic substance is selected of the group of citric acid, oxalic acid, malonic acid, succinic acid, adipic acid, sulphamic acid, and the corresponding salt of said acid.

13. Granulated composition according to claim 12, wherein the acidic substance is citric acid and sulphamic acid.

14. Granulated composition according to claim 13, wherein the ratio of citric acid to sulphamic acid is between 5:1 and 1:5, more preferably between 3:1 and 1:3, most preferably between 1:1.

15. Household products comprising a granulated composition according to any of the preceding claims.

16. Industrial products comprising a granulated composition according to claims 1 to 14

17. Use of a granulated composition as defined in one of the claims 1 to 16 for stain removal.

18. A method for producing a granulated composition comprising the steps of
i) mixing a composition comprising
from 10% to 90% by weight of an effervescent component;
from 5% to 70% by weight of an acidic substance;
from 0.1% to 30% by weight of a detergent; and
up to 84.9% by weight of other ingredients; and thereafter
ii)fluidizing the mixture of step i) on a fluidized bed with a water containing gas, thereby forming the protecting outer layer.

19. A method according to claim 18 wherein in the water containing gas the water is atomized.

20. A method according to claim 18 comprising spraying a fragrance on the granulated composition after fluidizing the mixture.

## Patentansprüche

1. Granulatzusammensetzung, umfassend einen sprudelnden Bestandteil, und wobei die Granalien aus einem Kernmaterial, das 5 bis 70 Gew.-% einer sauren Substanz, ein Detergens und einen Bestandteil umfasst, der in Gegenwart einer wässrigen sauren Lösung sprudelt, und einer Außenschutzschicht bestehen, **dadurch gekennzeichnet, dass** die Außenschutzschicht hydratisiertes Kernmaterial ist.

2. Granulatzusammensetzung nach Anspruch 1, **dadurch gekennzeichnet, dass** die Außenschutzschicht eine Dicke von 5 bis 10 µm aufweist.

3. Granulatzusammensetzung nach einem beliebigen der vorstehenden Ansprüche, die eine Partikelgröße von 0,1 bis 5 mm, vorzugsweise 0,5 bis 3 mm, aufweist.

4. Granulatzusammensetzung nach einem beliebigen der vorstehenden Ansprüche, die einen Duft als Inhaltsstoff umfasst.

5. Granulatzusammensetzung nach einem beliebigen der vorstehenden Ansprüche, die ein Trockenmittel als Inhaltsstoff umfasst.

6. Granulatzusammensetzung nach einem beliebigen der vorstehenden Ansprüche, die 10 bis 90 Gew.-% des sprudelnden Bestandteils umfasst.

7. Granulatzusammensetzung nach einem beliebigen der vorstehenden Ansprüche, die 0,1 bis 30 Gew.-% eines Detergens umfasst.

8. Granulatzusammensetzung nach einem beliebigen der vorstehenden Ansprüche, die bis zu 10 Gew.-% eines Dufts umfasst.

9. Granulatzusammensetzung nach einem beliebigen der vorstehenden Ansprüche, die bis zu 20 Gew.-% eines Trockenmittels umfasst.

10. Granulatzusammensetzung nach einem beliebigen der vorstehenden Ansprüche, die bis zu 30 Gew.-% einer abreibenden Substanz umfasst.

11. Granulatzusammensetzung nach einem beliebigen der vorstehenden Ansprüche, wobei der sprudelnde Bestandteil ausgewählt ist aus der Gruppe von Natriumbicarbonat, Natriumsequicarbonat, Kaliumbicarbonat und Kaliumcarbonat.

12. Granulatzusammensetzung nach Anspruch 1 bis 11, wobei die saure Substanz ausgewählt ist aus der Gruppe von Citronensäure, Oxalsäure, Malonsäure, Bernsteinsäure, Adipinsäure, Sulfaminsäure und dem entsprechenden Salz der Säure.

13. Granulatzusammensetzung nach Anspruch 12, wobei die saure Substanz für Citronensäure und Sulfaminsäure steht.

14. Granulatzusammensetzung nach Anspruch 13, wobei das Verhältnis von Citronensäure zu Sulfaminsäure zwischen 5:1 und 1:5, vorzugsweise zwischen 3:1 und 1:3, besonders bevorzugt 1:1, beträgt.

15. Haushaltsprodukte, umfassend eine Granulatzusammensetzung nach einem beliebigen der vorstehenden Ansprüche.

16. Industrieprodukte, umfassend eine Granulatzusammensetzung nach den Ansprüche 1 bis 14.

17. Verwendung einer Granulatzusammensetzung, wie in einem der Ansprüche 1 bis 16 definiert, zur Fleckentfernung.

18. Verfahren zur Herstellung einer Granulatzusammensetzung, umfassend die Stufen von
i) Mischen einer Zusammensetzung, umfassend
von 10 bis 90 Gew.-% eines sprudelnden Bestandteils;
von 5 bis 70 Gew.-% einer sauren Substanz;
von 0,1 bis 30 Gew.-% eines Detergens; und
bis zu 84,9 Gew.-% andere Inhaltsstoffe; und danach
ii) Wirbeln des Gemisches von Stufe i) in einer Wirbelschicht mit einem Wasser enthaltenden Gas, um **dadurch** die Außenschutzschicht zu bilden.

19. Verfahren nach Anspruch 18, wobei in dem Wasser enthaltenden Gas das Wasser atomisiert ist.

20. Verfahren nach Anspruch 18, umfassend ein Sprühen eines Dufts auf die Granulatzusammensetzung nach einem Wirbeln des Gemisches.

## Revendications

1. Composition granulée comprenant un composant effervescent, et dans laquelle les granulés sont constitués d'une matière de noyau comprenant de 5 à 70% en poids d'une substance acide, un détergent et un composant qui est effervescent en présence d'une solution acide aqueuse, et une couche de protection externe, **caractérisée en ce que** la couche de protection externe est une matière de noyau hydratée.

2. Composition granulée selon la revendication 1, **caractérisée en ce que** la couche de protection externe possède une épaisseur de 5 à 10 µm.

3. Composition granulée selon l'une quelconque des revendications précédentes, ayant une dimension particulaire de 0,1 à 5 mm, de préférence de 0,5 à 3 mm.

4. Composition granulée selon l'une quelconque des revendications précédentes, comprenant en tant qu'ingrédient un parfum.

5. Composition granulée selon l'une quelconque des revendications précédentes, comprenant en tant qu'ingrédient un agent desséchant.

6. Composition granulée selon l'une quelconque des revendications précédentes, comprenant 10 à 90% en poids du composant effervescent.

7. Composition granulée selon l'une quelconque des revendications précédentes, comprenant 0,1 à 30% en poids d'un détergent.

8. Composition granulée selon l'une quelconque des revendications précédentes, comprenant jusqu'à 10% en poids d'un parfum.

9. Composition granulée selon l'une quelconque des revendications précédentes, comprenant jusqu'à 20% en poids d'un agent desséchant.

10. Composition granulée selon l'une quelconque des revendications précédentes, comprenant jusqu'à 30% en poids d'une substance abrasive.

11. Composition granulée selon l'une quelconque des revendications précédentes, dans laquelle le composant effervescent est choisi dans le groupe constitué par le bicarbonate de sodium, le sesquicarbonate de sodium, le bicarbonate de potassium et le carbonate de potassium.

12. Composition granulée selon la revendication 1 à 11, dans laquelle la substance acide est choisie dans le groupe constitué par l'acide citrique, l'acide oxalique, l'acide malonique, l'acide succinique, l'acide adipique, l'acide sulfamique et le sel correspondant dudit acide.

13. Composition granulée selon la revendication 12, dans laquelle la substance acide est l'acide citrique et l'acide sulfamique.

14. Composition granulée selon la revendication 13, dans laquelle le rapport de l'acide citrique à l'acide sulfamique est compris entre 5/1 et 1/5, plus préférablement entre 3/1 et 1/3, le plus préférablement est de 1/1.

15. Produit ménager comprenant une composition granulée selon l'une quelconque des revendications précédentes.

16. Produit industriel comprenant une composition granulée selon les revendications 1 à 14.

17. Utilisation d'une composition granulée telle que définie dans l'une des revendications 1 à 16 pour éliminer les taches.

18. Procédé de production d'une composition granulée, comprenant les étapes consistant à
i) mélanger une composition comprenant:
de 10% à 90% en poids d'un composant effervescent;
de 5% à 70% en poids d'une substance acide;
de 0,1 % à 30% en poids d'un détergent; et
jusqu'à 84,9% en poids d'autres ingrédients; et ensuite
ii) fluidiser le mélange de l'étape i) sur un lit fluidisé avec un gaz contenant de l'eau, formant ainsi la couche de protection externe.

19. Procédé selon la revendication 18, dans lequel, dans le gaz contenant de l'eau, l'eau est atomisée.

20. Procédé selon la revendication 18, comprenant la pulvérisation d'un parfum sur la composition granulée après la fluidisation du mélange.
